Europäisches Patentamt

European Patent Office

Office européen des brevets

(11) Publication number: **0 054 939**
**B1**

(12) **EUROPEAN PATENT SPECIFICATION**

(45) Date of publication of patent specification: **01.04.87**

(51) Int. Cl.⁴: **H 01 S 3/13, H 01 S 3/03**

(21) Application number: **81110602.0**

(22) Date of filing: **18.12.81**

(54) **Laser device.**

(30) Priority: **22.12.80 JP 180472/80**

(43) Date of publication of application:
**30.06.82 Bulletin 82/26**

(45) Publication of the grant of the patent:
**01.04.87 Bulletin 87/14**

(84) Designated Contracting States:
**DE FR GB SE**

(56) References cited:
**EP-A-0 004 190**
**DE-A-1 912 292**
**DE-A-1 942 786**

**PATENT ABSTRACTS OF JAPAN, vol.5, no.19,**
**(E-44) (691), February 4, 1981.**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Yoshida, Kenichi**
**c/o Osaka Works of Sumitomo El. Ind. Ltd.**
**1-3, Shimaya 1-chome Konohana-ku Osaka (JP)**
Inventor: **Ono, Kimizo**
**c/o Osaka Works of Sumitomo El. Ind. Ltd.**
**1-3, Shimaya 1-chome Konohana-ku Osaka (JP)**
Inventor: **Sunago, Katsuyoshi**
**c/o Osaka Works of Sumitomo El. Ind. Ltd.**
**1-3, Shimaya 1-chome Konohana-ku Osaka (JP)**
Inventor: **Takenaka, Shinya**
**c/o Osaka Works of Sumitomo El. Ind. Ltd.**
**1-3, Shimaya 1-chome Konohana-ku Osaka (JP)**
Inventor: **Iwai, Tohru**
**c/o Osaka Works of Sumitomo El. Ind. Ltd.**
**1-3, Shimaya 1-chome Konohana-ku Osaka (JP)**

(74) Representative: **Henkel, Feiler, Hänzel & Partner**
**Möhlstrasse 37**
**D-8000 München 80 (DE)**

Courier Press, Leamington Spa, England.

## Description

This invention relates to a laser device, and more particularly to a laser output controlling device which controls a laser output on the parameters of gas pressure and current by a simple operation.

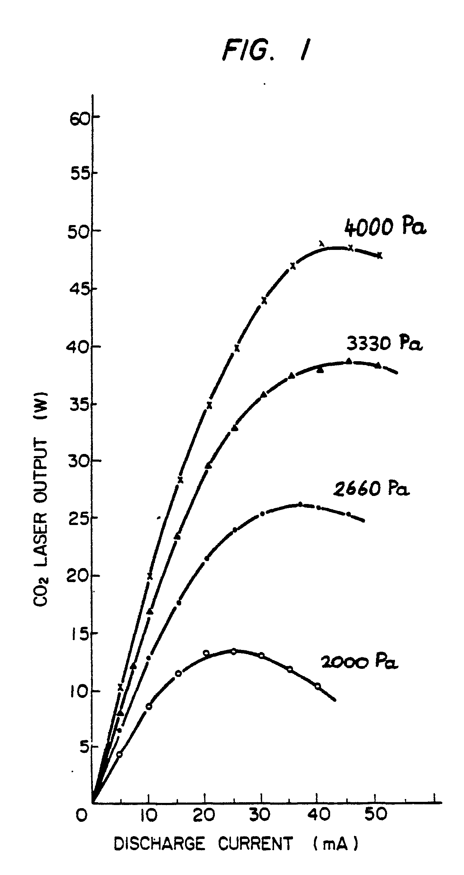

In a laser knife or a laser machining device, the laser output must be controlled. In the laser output control, for instance in the case of a $CO_2$ laser, a discharge current value must be controlled, and the gas pressure in a laser oscillating tube should also be controlled, since the $CO_2$ laser output varies with discharge current and gas pressure. More specifically, when the discharge current is 10 mA, the $CO_2$ laser output is about 8.5 W with a gas pressure 2000 Pa, about 13 W with a gas pressure 2660 Pa, about 17 W with a gas pressure 3330 Pa, and about 20 W with a gas pressure 4000 Pa, as indicated in Fig. 1. When the gas pressure is set to 2660 Pa, the laser output is about 21.5 W with a current 20 mA, and is about 25.5 W with a current 30 mA.

Heretofore, the gas pressure and the current value have been adjusted individually. That is, the gas pressure has been controlled by adjusting the control value of the gas pipe, while the current value has been controlled with a control knob.

In such a conventional device, the gas pressure and the current value are controlled manually, and simultaneous control of the two parameters is considerably difficult. If a person unskilled in the control of the device attempts to control the parameters, he may cause serious trouble. For instance, when it is desired to obtain a laser output 25 W in Fig. 1, the current value can be set to 13 mA with a gas pressure 4000 Pa, but the laser output is greatly changed with a slight change in current. Further, when it is desired to obtain a laser output 30 W, the gas pressure can be set at 2930 Pa with a current 30 mA, but the laser output will changed greatly with a slight change in gas pressure.

The controls for these two parameters cannot be easily controlled by a person who may have a laser attachment in hand, and therefore a doctor performing an operation with a laser knife cannot freely control the gas pressure and the current value. Thus, the conventional device is unsatisfactory from both safety and reliability viewpoints.

There is a device known in the art in which the gas pressure is fixed so that only the current value is controlled. However, since the characteristic curve has a considerably steep part and the output peak is limited, as shown in Fig. 1, it is difficult to provide a laser output which is stable over a wide range.

In view of the above-identified difficulties, an object of this invention is to provide a laser device in which the gas pressure and the current value are not individually controlled to control the laser outputl i.e. in which the troublesome or difficult control and control errors are eliminated, and which is high in security and reliability and provides a stable laser output.

The present invention provides a laser device comprising pressure control means for controlling a laser gas pressure in response to a pressure control signal current control means for controlling a laser discharge current in response to a current control signal, adjusting means for adjusting the pressure control signal and the current control signal, and output control means for controlling said adjusting means and simultaneously varying both said pressure control and current control signals in a way that the current has a value near to the maximum of one of a group of curves which show each for a certain pressure the output level indicated along the ordinate, in dependence of the current, indicated along the abscissa.

Thus, the foregoing object of the invention is achieved by the provisions of a laser device in which, according to this invention, a laser gas is supplied from a cylinder through a flow rate adjusting section to a laser oscillating device, electric power is supplied from a power source through a current controlling section to the laser oscillating device, control signals which are applied from signal sources to the flow rate adjusting section and the current controlling section respectively are combined according to a desired laser output, and the combination of the control signals are selected by an output control switch assembly, so that the current has a value near to the maximum of one of a group of curves which show each for a certain pressure the output power level of the laser indicated along the ordinate in depdence of the current, indicated along the abscissa.

This invention can be more fully understood from the following detailed description when taken in conjunction with the accompanying drawings, in which

Fig. 1 is a characteristic curve diagram showing $CO_2$ laser output with discharge current;

Fig. 2 is a schematic circuit diagram showing one example of a laser output controlling device;

Fig. 3 and 4 are circuit diagrams showing two examples of a current controlling section in the laser output controlling device; and

Fig. 5 is a block diagram showing another example of the laser output controlling device which utilizes a microcomputer.

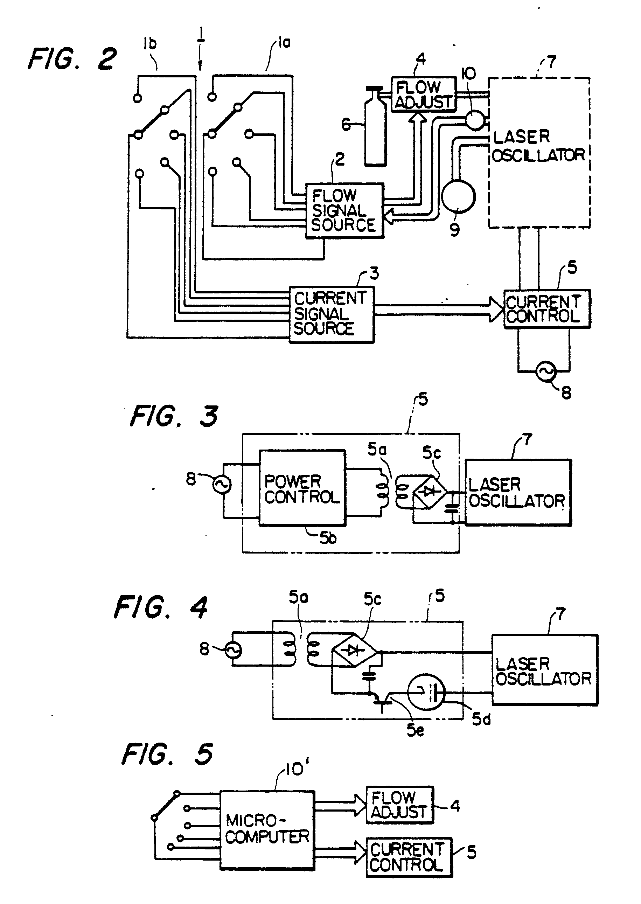

Embodiments of the invention will be described with reference to Figs. 2 through 5. In Fig. 2, an output control switch assembly 1 indicates laser outputs. The switch assembly 1 consists of two switches 1a and 1b which are operated simultaneously by one operating knob to set a laser output. The switch 1a of the switch assembly 1 is connected to a signal source 2 in a flow rate adjusting section, and the switch 1b is connected to a signal source 3 in a current controlling section. These signal sources 2 and 3 supply control signals to a flow rate adjusting section 4 and a current controlling section 5, respectively.

The control signals provided by the signal sources 2 and 3 are combined according to a selected laser output. The control signals are selectively combined in such a manner that, for instance when it is desired to obtain a laser output of 10 W, a current vs. power characteristic of a gas pressure 2000 Pa in Fig. 1 is utilized, and when it is required to obtain laser outputs 30 to 35 W, a characteristic of a gas pressure 3330 Pa is utilized. Thus, for instance, when a laser output of 10 W is selected, the control signals are so set that a gas pressure of 2000 Pa and a current of 12 mA are provided, and when a laser output of 30 W is selected, the control signals are so set that a gas pressure of 3330 Pa and a current of 20 mA are provided. In order to minimize the output variation, such combination are determined in the signal sources 2 and 3 in advance so that the top parts of the characteristic curves in Fig. 1 are used when the slopes are not as steep.

The control signal from the signal source 2 controls the flow rate adjusting section 4. The flow rate adjusting section 4 may employ a mass flow controller which is commercially available or may employ a system of driving a manual flow rate control valve with a motor. The flow rate adjusting section 4 is connected between a cylinder 6 filled with gas and a laser oscillating device 7.

The control signal from the signal source 3 is supplied to the current controlling section 5. In the current controlling section 5, as shown in a circuit surrounded by the broken line in Fig. 3, the primary side of a high voltage transformer 5a is controlled by a power control element 5b such as a thyristor, a thyratron or a saturable reactor, and a DC discharging rectifier 5c is arranged on the secondary side of the high voltage transformer, or the primary side of the high voltage transformer can be controlled by a motor driven "slidac" in a well known manner. Alternatively, in the current controlling section 5, as shown in Fig. 4, a high voltage withstanding transmitting tube 5d can be connected in series with a laser oscillating tube on the secondary side of the high voltage transformer 5a and a power transistor 5e can be arranged, so as to obtain a constant current. The current controlling section 5 is connected between a power source 8 and the laser oscillating device 7, to control the discharge current of the laser oscillating tube.

A vacuum pump 9 for pumping the gas is connected to the laser oscillating device 7, i.e., to the laser oscillating tube. By making the gas pumping speed of the vacuum pump 9 constant, the flow rate adjusting section 4 is able to perform pressure adjustment.

In Fig. 2, reference numeral 10 designates a pressure gauge. Since the pressure can be converted into an electrical signal by the pressure gauge 10, pressure control can be carried out with higher reliability by feeding back the electrical pressure signal to the flow rate control signal source 2.

As shown in Fig. 5, instead of the signal sources 2 and 3, a microcomputer 10 may be provided, and the output control switch assembly 1 can be connected to the input of the microcomputer 10'.

It goes without saying that, in this case, the microcomputer 10' will function to select from a memory one of the combinations of two parameter control signals according to a selected laser output.

Instead of the output control switch assembly 1, variable resistors may be employed. In such a case, the control signals could be continuously variable and could be set and combined according to the continuous variations of the variable resistors.

As is apparent from the above description, according to this invention, the two control parameters are controlled by a single operation, to control the laser output. Therefore, the laser output can be controlled easily and correctly. When a doctor utilizes the laser output, he can control the laser output as desired with a high degree of safety, and the laser output is stable at all times.

**Claims**

1. A laser device comprising:
pressure control means (4, 6) for controlling a laser gas pressure in response to a pressure control signal,
current control means (5) for controlling a laser discharge current in response to a current control signal, and
adjusting means (2, 3) for adjusting the pressure control signal and the current control signal, and
output control means (1) for controlling said adjusting means (2, 3) and simultaneously varying both said pressure control and current control signals in a way that the current has a value near to the maximum of one of a group of curves which show each for a certain pressure the output power level of the laser indicated along the ordinate, in dependence of the current, indicated along the abscissa.

2. The laser device as claimed in claim 1, characterized in that said output control means (1) comprises:
pressure signal generating means (10) for generating said pressure control signal in response to a first input;
current signal generating means (8) for generating said current control signal in response to a second input; and
input means for simultaneously changing said first and second inputs in response to operation of said selection means.

3. The laser device as claimed in claim 2, characterized in that said input means comprises first and second switches (1a, 1b) ganged together for simultaneous operation by said selection means, said first and second switches (1a, 1b) providing said first and second inputs, respectively.

4. The laser device as claimed in claim 2, characterized in that said input means comprises memory means for providing a predetermined combination of first and second inputs in response to the output level selected by said adjusting means (2, 3).

5. The laser device as claimed in claim 1, characterized in that said output control means comprises a microcomputer (10') for providing a predetermined combination of pressure and current control signals to said pressure and current control means, respectively, in response to the output level selected by said adjusting means (2, 3).

6. The laser device as claimed in claims 1, 3 or 5, characterized in that said laser includes an oscillating device (7), and that said pressure control means comprises means (4) for controlling the rate of flow of a gas to said oscillating device (7) and that said pressure control signal is a flow rate control signal.

## Patentansprüche

1. Laser-Gerät, umfassend

eine Druckregeleinrichtung (4, 6) zum Regeln eines Laser-Gasdrucks nach Maßgabe eines Druckregelsignals,

eine Stromregeleinrichtung (5) zum Regeln eines Laser-Entladungsstroms nach Maßgabe eines Stromregelsignals,

eine Einstelleinrichtung (2, 3) zum Einstellen des Druckregelsignals und des Stromregelsignals sowie

eine Ausgangssteuereinheit (1) zum Steuern der Einstelleinrichtung (2, 3) und zum gleichzeitigen Variieren sowohl des Druckregels- als auch des Stromregelsignals in der Weise, daß der Strom eine Größe nahe dem Maximum einer Kurve einer Schar von Kurven aufweist, die jeweils für einen bestimmten Druck den Ausgangsleistungspegel des Lasers auf der Ordinate in Abhängigkeit von dem auf der Abszisse aufgetragenen Strom angeben.

2. Laser-Gerät nach Anspruch 1, dadurch gekennzeichnet, daß die Ausgangssteuereinheit (1)

eine Drucksignalerzeugungseinrichtung (10) zum Erzeugen des Druckregelsignals in Abhängigkeit von einem ersten Eingangssignal,

eine Stromsignalerzeugungseinrichtung (8) zum Erzeugen des Stromregelsignals in Abhängigkeit von einem zweiten Eingangssignal und

eine Eingangseinrichtung zum Gleichzeitigen Ändern von erstem und zweitem Eingangssignal in Abhängigkeit von der Betätigung der Einstelleinrichtung umfaßt.

3. Laser-Gerät nach Anspruch 2, dadurch gekennzeichnet, daß die Eingangseinrichtung erste und zweite, für gleichzeitige Betätigung durch die Einstelleinrichtung verblockte Schalter (1a, 1b), welche erstes bzw. zweites Eingangssignal liefern, aufweist.

4. Laser-Gerät nach Anspruch 2, dadurch gekennzeichnet, daß die Eingangseinrichtung eine Speichereinheit zur Lieferung einer vorbestimmten Kombination von erstem und zweitem Eingangssignal in Abhängigkeit von dem mittels der Einstelleinrichtung (2, 3) gewählten Ausgangspegel aufweist.

5. Laser-Gerät nach Anspruch 1, dadurch gekennzeichnet, daß die Ausgangssteuereinheit einen Mikrorechner (10') zur Lieferung einer vorbestimmten Kombination von Druck- und Stromregelsignalen zur Druckregeleinrichtung bzw. Stromregeleinrichtung in Abhängigkeit von dem mittels der Einstelleinrichtung (2, 3) gewählten Ausgangspegel aufweist.

6. Laser-Gerät nach einem der Ansprüche 1, 3 oder 5, dadurch gekennzeichnet, daß der Laser eine Schwing- oder Oszillatorvorrichtung (7) aufweist, daß die Druckregeleinrichtung eine Einheit (4) zum Regeln der Strömungsmenge eines Gases zur Schwing- oder Oszillatorvorrichtung (7) aufweist und daß das Druckregelsignal ein Strömungsmengenregelsignal ist.

## Revendications

1. Dispositif laser comprenant:

un moyen de réglage de pression (4, 6) pour régler la pression d'un gaz laser en réponse à un signal de réglage de pression, un moyen de réglage de courant (5) pour régler le courant de décharge d'un laser en réponse à un signal de réglage de courant, des moyens d'ajustement (2, 3) pour ajuster le signal de réglage de pression et le signal de réglage de courant et

un moyen de réglage de sortie (1) pour commander les moyens d'ajustement (2, 3) et varier simultanément le signal de réglage de pression et le signal de réglage de courant, de manière que l'intensité du courant soit voisine de la valeur maximale de l'une des courbes d'une famille de courbes représentant chacune, pour une certaine pression, le niveau de la puissance de sortie du laser, indiquée en ordonnée, en fonction du courant, indiqué en abscisse.

2. Dispositif laser selon la revendication 1, caractérisé en ce que le moyen de réglage de sortie (1) comprend:

un moyen générateur de signal de pression (10) pour générer le signal de réglage de pression en réponse à une première entrée;

un moyen générateur de signal de courant (8) pour générer le signal de réglage de courant en réponse à une deuxième entrée; et

un moyen d'entrée pour changer simultanément la première et la deuxième entrée en réponse au fonctionnement du moyen de sélection.

3. Dispositif laser selon la revendication 2, caractérisé en ce que le moyen d'entrée comprend un premier et un deuxième commutateur (1a, 1b) couplés mécaniquement pour être manoeuvrés simultanément par le moyen de sélection, les premier et deuxième commutateurs (1a, 1b) formant la première respectivement la deuxième entrée.

4. Dispositif laser selon la revendication 2, caractérisé en ce que le moyen d'entrée comprend une mémoire pour fournir une combinaison prédéterminée d'une première et d'une deuxième entrée en réponse au niveau de sortie sélectionné par les moyens d'ajustement (2, 3).

5. Dispositif laser selon la revendication 1, caractérisé en ce que le moyen de réglage de sortie comprend un microcalculateur (10') pour fournir une combinaison prédéterminée de signaux de réglage de pression et de courant aux moyens respectifs de réglage de pression et de courant en réponse au niveau de sortie sélectionné par les moyens d'ajustement (2, 3).

6. Dispositif laser selon les revendications 1, 3 ou 5, caractérisé en ce que le laser comporte un dispositif oscillant (7), que le moyen de réglage de pression comprend un moyen (4) pour régler le débit d'un gaz s'écoulant vers ce dispositif oscillant (7) et que le signal de réglage de pression est un signal de réglage de débit.

FIG. 1

0 054 939

FIG. 2

FIG. 3

FIG. 4

FIG. 5